# EUROPEAN PATENT SPECIFICATION

(11) **EP 3 815 886 B1**
(45) Date of publication and mention of the grant of the patent: **05.06.2024**
(21) Application number: 19382954.6
(22) Date of filing: 31.10.2019
(51) Int. Cl.: B29C 70/48, B29C 67/24, B29C 70/54

(54) **A METHOD FOR PRODUCING HYBRID COMPOSITE PARTS**
VERFAHREN ZUR HERSTELLUNG VON HYBRIDEN VERBUNDTEILEN
PROCÉDÉ DE PRODUCTION DE PIÈCES COMPOSITES HYBRIDES

(43) Date of publication of application: 05.05.2021
(73) Proprietor: Fundación Tecnalia Research & Innovation, 20009 San Sebastián, Guipúzcoa (ES)
(72) Inventor: De la Calle Lizarazu, Amaia, 20009 San Sebastián - Guipúzcoa (ES); Ollo Escudero, Olatz, 20009 San Sebastián - Guipúzcoa (ES); Mezzacasa Lasarte, Riccardo, 20009 San Sebastián - Guipúzcoa (ES); Bellvert Rios, Eduard, 20009 San Sebastián - Guipúzcoa (ES); Elizetxea Ezeiza, Cristina, 20009 San Sebastián - Guipúzcoa (ES); García Arrieta, Sonia, 20009 San Sebastián - Guipúzcoa (ES)
(74) Representative: Balder IP Law, S.L.

(56) References cited:
- DE-A1-102013 012 593
- US-A1- 2015 343 721
- US-A1- 2019 291 363

## Description

### TECHNICAL FIELD

The present invention refers to a method to produce hybrid composite parts where at least one portion of a moulded composite part comprises a polymer matrix reinforced with a fiber preform and at least another portion of the part only comprises the polymer matrix.

The invention is suitable for use in a wide variety of industries, e.g. in the production of automotive or aeronautical components.

### BACKGROUND OF THE INVENTION

The use of glass fiber, carbon fiber, aramide or other fibers to reinforce thermoplastic parts is well known in the state of the art. Two techniques for producing fiber-reinforced thermoplastic parts are RTM and organosheet compression moulding (prefabricated sheets impregnated with continuous fibers).

Thermoplastic RTM can be used in the production of composite parts reinforced with woven or non-woven fibers, which are impregnated in resin, so that the resulting parts have higher mechanical properties than injection moulded parts without reinforcement. The thermoplastic RTM process consists on the feeding of various reactants in the corresponding mixing ratio with the monomer on the reactive process. Then, it takes place the introduction of the reactants under an injection pressure into the mould, at a specific temperature to carry out the polymerization, solidification of the resulting matrix and the moulding of the final product.

The mould may comprise a fiber preform prior to the injection of the reactants, to obtain a reinforced part. The reactive thermoplastic precursor used flow easily through the mould cavity and through the reinforcing fibers located inside the mould. Therefore, the mixture must have a low viscosity (e.g., 4 - 10 cp) to allow the reactant mixture to fill the mould completely. This ability to flow, as well as the ability to polymerise in situ, allows the production of a thermoplastic material with suitable mechanical properties (e.g. a traction module >1000 MPa for the non-reinforced matrix).

In the production of thermoplastic parts, for example in the automotive industry, often there is a need for additional structural reinforcement elements, such as ribs, to prevent deformation, specific finishes, protrusions, such as anchorages or bolts, to enable further assembly, or additional geometrical features to be included on a part's surface. It is well known that these features may be added in a subsequent over injection step to the already moulded main body of the part. This post-processing step requires additional moulds and manufacturing resources with the consequent increasing of the manufacturing time and costs.

EP2879924 A1 discloses the manufacture of a plastic automotive pedal wherein the pedal is composed of moulded organosheets reinforced with continuous fiber. The pedal includes crossed reinforcing ribs, which are injection moulded into the main body of the pedal as a separate process with a separate mould. For an effective joint between the main body and the ribs, it is advantageous if both portions comprise the same thermoplastic. It would also be advantageous if the number of process steps and moulds for the production of the part could be reduced.

EP3088152 A1 discloses a process of effectively joining RTM moulded carbon-fiber reinforced thermoplastic sub-parts to create a single structured part. The process comprises providing a first part preform into a resin transfer mould, heating said first part into the resin transfer mould for performing a curing cycle of the first part, cooling said first part before the curing cycle is completed so that a semi-cured first part is obtained and joining the semi-cured first part to a cured prepreg second part for obtaining the final composite part. An adhesive or rivets may additionally be used to improve the joint. The semi-cured part is deformable requiring the use of special trimming procedures in later processing.

EP3078465 A1 describes a device for polymerizing lactams in moulds, in which the three components of the polymerization reaction (lactam, initiator and activator) are fed and dosed into a mould independently through a mixing chamber located at the entrance of the mould. EP274306 A1 describes other technology for polymerizing lactams in moulds. It consists on mixing a part of the lactam with the initiator creating a first premixture and mixing the rest of the lactam with the activator, creating a second mixture. Then, these two premixtures are mixed together to feed the mould. The resulting reactive thermoplastic precursor, i.e., the mix of the monomer, e.g., a lactam, with the initiator and the activator, polymerizes under specific temperature and pressure conditions inside the mould itself. These techniques for polymerizing lactams in moulds can be combined with RTM or compression moulding of Organosheets techniques for manufacturing composites parts.

Document DE102013012593 discloses a method for producing composite components with a thermoplastic or thermoelastic polymer matrix with at least one core element. Document US2019291363 discloses a method and a device for manufacturing a composite thermoplastic part by vacuum injection-compression-molding. Document US2015343721 discloses a device for a resin-injection process for manufacturing an elongate fiber-composite component.

Therefore, it would be advantageous to provide a process to produce hybrid reinforced thermoplastic parts with a reduced number of steps and a reduced need for additional moulds. So that, it would also be advantageous if the polymerization of the hybrid composite part is carried out in one single step, in order to all portions of the hybrid part, reinforced and non-reinforced portions, comprise the same thermoplastic without joints between the reinforced portions and non-reinforced portions.

### DESCRIPTION OF THE INVENTION

A first aspect relates to a method according to claim 1 for producing hybrid composite parts. As used herein, the "hybrid composite parts" may refer to moulded parts wherein at least one portion of a moulded part comprises a thermoplastic matrix reinforced with a fiber preform or fiber mat and at least one other portion of the part only comprises the same thermoplastic matrix (without reinforcement).

The method comprises providing a mould body that defines a mould cavity. As used herein the "mould cavity" may refer to the space defined by the mould body, in which a fluid having the ability of change its state from liquid to solid under specific temperature and pressure conditions, e.g., by polymerizing, is injected. The geometry of the mould cavity defines the shape and geometry of the resulting moulded part. In some examples, the mould may comprise at least one male mould and at least one female mould that, when it closes, define the inner mould cavity.

The mould body will be at the polymerization temperature when the reactive thermoplastic precursor is injected into the mould cavity to create the hybrid composite part. In some embodiments, this polymerization temperature of the reactive thermoplastic precursor may be the room temperature, while in some other examples, this polymerization temperature may be different. For example, the mould body may comprise heating or cooling means to reach the polymerization temperature of the particular reactive thermoplastic precursor that is to be used to produce the hybrid composite parts.

As used herein, the "reactive thermoplastic precursor" may refer to any combination of chemical components that after reacting creates a thermoplastic matrix by means of reactive in situ polymerization and without the need of solvents. In particular, each reactive thermoplastic precursor may be characterized by a set of interrelated parameters such as the polymerization temperature, the percentage of the catalytic system and/or other possible chemical components of the reactive thermoplastic precursor and the polymerization time.

The method further comprises placing a fiber preform into the mould cavity, the fiber preform being located in at least a first area of the mould cavity and at least a second area of the mould cavity being free of the fiber preform, i.e., the second area no having fiber preform. The fiber preform may be one single and continuous portion of fiber preform located in one single and continuous area of the mould cavity or may be a plurality of parts or portions of the same or different fiber preforms located in different and independent areas of the mould cavity. Besides, the at least one second area free of fiber preform may be one single and continuous area of the mould cavity or may be different and independent areas of the mould cavity interspersed with areas having fiber preforms.

After this, the mould body is closed and perfectly sealed to ensure there are no liquid leaks during the injection and polymerization of the reactive thermoplastic precursor.

Then, the reactive thermoplastic precursor is injected inside the mould cavity until the space defined by the mould cavity is completely filled. The mould body may comprise one or more injection points to feed the mould body with the reactive thermoplastic precursor. To ensure that both fiber preform areas and areas without fiber of the mould cavity are completely impregnated, the injection of the reactive thermoplastic precursor can be carried out with a specific profile of pressure.

To carry out this, the injection pressure profile applied to the reactive thermoplastic precursor should ensure that the reactive thermoplastic precursor is distributed within the mould cavity with a constant and homogeneous flow. The number and location of the inlets for injecting the reactive thermoplastic precursor will ensure that the reactive thermoplastic precursor is homogeneously distributed inside the mould, and that there are no empty spaces within the mould cavity.

Then, when the polymerization of the reactive thermoplastic precursor has been carried out, and solidification taken place, the mould body is opened, and the resulting hybrid composite part is demoulded.

The resulting hybrid composite parts comprise a reinforced thermoplastic matrix portion, corresponding to the area of the mould cavity in which the fiber preform has been located, and a thermoplastic matrix portion, corresponding to the area of the mould cavity free of fiber preform. The resulting polymerized thermoplastic matrix is the same in both parts. In addition, the resulting hybrid composite part may comprise one single and continuous reinforced thermoplastic matrix portion and one single and continuous thermoplastic matrix portion (non-reinforced) or may comprise a plurality of reinforced thermoplastic matrix portions, interconnected one to each other by the interposition of a plurality of thermoplastic matrix portions (non-reinforced).

The non-reinforced thermoplastic matrix portions of the hybrid composite part comprises structural or reinforcing elements of the hybrid composite part, such as ribs, masts, anchorages, frames or bolts, etc.. Thus, these structural or reinforcing elements of the hybrid composite part are made of only thermoplastic matrix. In some embodiments, after closing the mould body and prior to injecting the reactive thermoplastic precursor, vacuum may be applied in the whole mould cavity. The mould body should be maintained under vacuum pressure during the injection and polymerization of the reactive thermoplastic precursor.

The mould body may comprise a number of outlets connecting the mould cavity with the outside. In these outlets, a vacuum system is connected to suck out the air from the mould cavity. The vacuum applied will contribute to distribute homogeneously the reactive thermoplastic precursor inside the mould cavity and to completely fill the mould cavity with the reactive thermoplastic precursor. The vacuum applied inside the mould cavity, that shall be as high as possible in order to suck as much air as possible from the mould cavity, will contribute to reduce the presence of defects or pores in the resulting hybrid composite part. Moreover, since the presence of oxygen inside the mould cavity may affect the polymerization reaction of the reactive thermoplastic precursor, the generation of a high vacuum level inside the mould cavity will reduce the amount of oxygen in contact with the reactive thermoplastic precursor when injected improving the quality of polymerization.

In some embodiments, the applied vacuum level should be at least 0.9 bar or higher (e.g. 0.99 or 0.999 bar). Once the desired vacuum level, e.g., the maximum vacuum level, is reached within the mould cavity, the reactive thermoplastic precursor may be injected into the mould cavity.

In some embodiments, the reactive thermoplastic precursor comprises two components: a monomer or a prepolymer and a catalytic system. For example, the monomer may be a lactam, the prepolymer may be an acrylic and the catalytic system may be a combination of an initiator component and an activator component. Alternatively, the catalytic system may be only a catalyst. The monomer and/or the prepolymer may be in a solid state at room temperature so it may have to be heated until becoming fluid or may be in a liquid state at room temperature. In turn, the catalytic system may be also in solid or liquid state at room temperature. These at least two components, monomer or prepolymer, and catalytic system, are dosed continuously in a mixing chamber, from which the mixture of materials, i.e., the reactive thermoplastic precursor, will be injected into the mould. The mix of these at least two components in the mixing chamber is carried out immediately prior the injection of the reactive thermoplastic precursor into the mould cavity in order to avoid the beginning of the polymerization of the reactive thermoplastic precursor out of the mould cavity.

Once the reactive thermoplastic precursor is injected int the mould cavity, the polymerization of the reactive thermoplastic precursor takes place within the mould body producing the resulting hybrid composite part.

In some examples, when the reactive thermoplastic precursor is formed by a liquid caprolactam, a liquid activator component and a liquid initiator component, said reactive thermoplastic precursor may be made up of caprolactam 99,61 mol%, initiator 0,17 mol% and activator 0,22 mol%. In some other examples, the reactive thermoplastic precursor may be made up of caprolactam 98 mol%, initiator 0,7 mol% and activator 0,88 mol%. For any other monomer, prepolymer or catalytic system, the percentages of the components forming the reactive thermoplastic precursor may be different and shall correspond to the reaction stoichiometries of the corresponding monomers and catalytic systems.

In some embodiments, two independent premixtures may be prepared prior to mixing the monomer or prepolymer, the initiator and the activator component all together. The first premixture may comprise a mix of the activator component and a fraction of the monomer, e.g., a lactam, or the prepolymer, e.g., an acrylic, and the second premixture may comprise the initiator component and the remaining fraction of the monomer or prepolymer. Both premixtures may be feed in a continuous and dosed manner in the mixing chamber, where the premixtures are mixed to create the reactive thermoplastic precursor. Then, the reactive thermoplastic precursor is immediately injected into the mould cavity where the reactive polymerization takes place producing the resulting hybrid composite part with the reinforced and non-reinforced portions.

In some embodiments, the injection pressure profile applied during injection of the reactive thermoplastic precursor ranges from 0,1 to 100 bar. More preferably, the injection pressure profile is selected from a group comprising: a low-pressure injection profile ranging from 0,1 to 8 bars, a high-pressure injection profile ranging from 25 to 30 bars, a compression injection profile ranging from 50 to 100 bars and any combination thereof.

In some embodiments, the fiber preform is selected from a group comprising: glass fiber preforms, aramid fiber preforms, carbon fiber preforms, natural fiber preforms and any combination thereof. The selection of the fibre preform may depend on the mechanical properties of the hybrid composite part to be manufactured.

In some embodiments, the method comprises providing some pinch elements which are located inside the mould cavity and preferably on the fiber preform. These pinch elements, that are attached to the mould body, e.g., to the male mould or to the female mould, are configured to retain the fiber preform and to force the reactive thermoplastic matrix to flow with a constant and homogeneous rate though the mould cavity. Preferably, these pinch elements may be located on the edges of the fibre preform.

In some embodiments, after injecting the reactive thermoplastic precursor into the mould, the method comprises applying an over-pressure to the reactive thermoplastic precursor. The application of the vacuum inside the mould cavity, the pressure applied when the reactive thermoplastic precursor is injected, and the subsequent over-pressure applied to the part, forces the reactive thermoplastic precursor to completely fill both the area with fiber preform and the area without the fiber preform.

In some embodiments, the injection of the reactive thermoplastic precursor into the mould cavity is carried out by a resin transfer moulding (RTM) technique. For example, the RTM technique may be a compression RTM (C-RTM) technique, a high-pressure RTM (HP-RTM) technique, a high-pressure compression RTM (HPC-RTM), or others.

A second aspect relates to a system, that is not claimed, for producing hybrid composite parts. This system comprises a mould body comprising at least one upper mould and at least one lower mould, which define the mould cavity. The system also comprises an injection system for injecting the reactive thermoplastic precursor into the mould cavity. The injection system may comprise containers for storing the components of the reactive thermoplastic precursor and, in some embodiments, some injection means, such as injection pumps, plasticizing screws, etc., for dosing and injecting the reactive thermoplastic precursor or the components of the reactive thermoplastic precursor into the mould cavity. Alternatively, the injection system, instead of the mentioned injection means may use gravity for dosing the components of the reactive thermoplastic precursor and for injecting the reactive thermoplastic precursor into the mould cavity. The mould cavity comprises at least a first area that is configured to have a fiber preform, the fiber preform partially or totally filling the space defined by said first area, and at least a second area configured to be free of fiber preform, i.e. the second area being without fiber. The reactive thermoplastic precursor that is injected into the mould cavity is configured to polymerize into the mould. This polymerized material creates, at least, a reinforced matrix portion of the hybrid composite part in the at least a first area of the mould cavity and a matrix portion of the hybrid composite part in the at least a second area of the mould cavity.

In some embodiments, the mould body comprises at least one inlet though which the reactive thermoplastic precursor is injected, by means for example, of injection pumps into the mould cavity. The number and location of the inlets for injecting the reactive thermoplastic precursor will depend on the particular geometry of the mould cavity, the thermoplastic viscosity and the percentage of fiber of the fiber preform.

In some embodiments, the injecting means are configured to apply an injection pressure profile to the reactive thermoplastic precursor that may range from 0,1 to 100 bar. More preferably, the injecting means are configured to apply an injection pressure profile that is selected from a group comprising: a low-pressure injection profile ranging from 0,1 to 8 bars, a high-pressure injection profile ranging from 25 to 30 bars, a compression injection profile ranging from 50 to 100 bars, and any combination thereof.

In some embodiments, the system for producing hybrid composite parts may comprise a vacuum system configured to apply vacuum inside the mould cavity before injection of the reactive thermoplastic precursor. Said vacuum is maintained inside the mould cavity during the polymerization period of the reactive thermoplastic precursor. For example, the mould body may comprise at least one outlet connected to a vacuum pump of the vacuum system, through which the vacuum is applied inside the mould cavity. The vacuum pump and the respective outlets of the mould body may be connected by corresponding vacuum lines, e.g., hoses made of rubber/flexible or hard plastic. The number and location of the outlets for sucking air form the mould cavity will depend on the particular geometry of the mould cavity, the monomer viscosity and the percentage of fiber of the fiber preform.

In some embodiments, the injection system comprises a mixing chamber for receiving in a continuous, dosed and separated manner a monomer or prepolymer and a catalytic system. The catalytic system may be formed by an initiator component and an activator component. The monomer, such as a lactam, or the prepolymer, such as an acrylic, and the catalytic system are mixed in the mixing chamber to form the reactive thermoplastic precursor. As an example, the injection system may comprise a first dosing device, e.g., a container or hopper connected to an injection pump to push the monomer or prepolymer towards the outlet of the container, to store and dose said monomer or prepolymer. The dosing device may comprise heating means to melt the monomer or prepolymer when it is solid at room temperature while simultaneously doses the monomer or prepolymer into the mixing chamber. The injection system may also comprise respective additional dosing devices to store and dose the catalytic system. More particularly, the injection system may comprise independent additional dosing devices connected to the injection pump for the catalytic system, that may be an initiator component and an activator component. This mixing chamber may have at least two separate inlets to receive the monomer or prepolymer and the catalytic system separately. More particularly, the mixing chamber may have three separate inlets to receive the monomer or prepolymer, the initiator and the activator components, separately. The materials (monomer or prepolymer and catalytic system) flow along independent pipes inside the mixing chamber until reaching a specific point of the mixing chamber where these materials come into contact for the first time. For example, the monomer, the initiator component and the activator component may be mixed as they pass through the mixing chamber and come outside to be injected into the mould cavity. That is to say, the three components that form the reactive thermoplastic precursor do not enter into contact with one another until some moments before accessing the mould body. This mixing chamber may have three separate inlets for receiving the three components.

In some embodiments, the injection system comprises a mixing chamber configured to receive in a continuous, dosed and separated manner two independent premixtures. As an example, the injection system may comprise a first dosing device, e.g., a container or a hopper connected to an injection pump to push premixtures towards the outlet of the container, to store and dose a first premixture, formed by the activator and a fraction of the monomer, e.g., a lactam, or prepolymer, and a second dosing device, e.g., another container connected to the injection pump, to store and dose a second premixture formed by the initiator and the remaining fraction of the monomer or prepolymer. The two premixtures flow along independent pipes inside the mixing chamber until reaching a specific point of the mixing chamber where these premixtures come into contact for the first time. For example, the first premixture and the second premixture may be mixed as they pass through the mixing chamber and come outside to be injected into the mould cavity. That is to say, the two premixtures that form the reactive thermoplastic precursor do not enter into contact with one another until some moments before accessing the mould body. Thus, these two premixtures create the reactive thermoplastic precursor at the moment immediately prior to entering the mould cavity. This mixing chamber may have two separate inlets for receiving the two premixtures

In some embodiments, the mould body comprises heating means to heat the mould body up to a polymerization temperature of the reactive thermoplastic precursor. As an example, the mould may comprise thermal actuators, thermal resistances or heating cartridges, among others, inside or in direct contact with the mould body.

The mechanical properties of the hybrid composite parts may be determined by selecting the reinforcement fiber preform, the components of the reactive thermoplastic precursor or the polymerization process conditions. For example, by modifying the concentration of the catalytic system (activator and initiator), the lactam and/or the combination of several lactams, the mechanical properties of the moulded hybrid composite part can change. Besides, by modifying the mould body temperature and injection pressure profile during the polymerization step, the mechanical properties of the moulded hybrid composite part can also be modified.

In addition, the mechanical properties of the hybrid composite parts will also depend on the location of the fiber preforms into the mould cavity that define the reinforced portions of the hybrid composite part, and on the geometry of non-reinforced portions of the hybrid composites parts, such as ribs, masts, etc., which are specially designed to increase the mechanical properties of the hybrid composite part.

The method and system for producing hybrid composite parts present several advantages and/or differences compared with previous methods and systems. In particular, they provide a single-step manufacturing process for manufacturing the hybrid composite part that is faster and avoids subsequent injection steps for adding the non-reinforced parts to a previously manufactured reinforced part. This implies a reduction of the manufacturing time as well as a reduction of costs in moulds (for example, 1 mould instead of 2, one for producing the reinforced part and other for adding the non-reinforced part to the reinforced part) and equipment (an RTM machine instead of a thermo-forming press plus an injection machine for the subsequent injection steps). They also avoid material compatibility problems since both zones of the hybrid composite part are made of the same reactive thermoplastic precursor and they polymerize at the same time (in one single step). Due to the fact that there are no joints in the moulded part, the hybrid composite part has greater robustness. This method and system also allow to manufacture hybrid composite parts having their perimeter zone made of non-reinforced thermoplastic matrix. This implies a significant saving of reinforcing fiber material and eliminates the need of carrying out trimming operations of either the preform and/or the final part. This method and system also provide high flexibility in the design of hybrid composite parts, allow the integration of elements such as bolts, masts, and clips, made of non-reinforced material into the hybrid composite part and allows to reduce the amount of fiber in the part maintaining the rigidity by replacing additional fiber reinforcements by reinforcing elements such as ribs made of only thermoplastic matrix.

Other advantages of the method and system for producing hybrid composite parts are that said method and system avoid the use of trimming and deburring processes, since parts with edges made of only thermoplastic matrix (without reinforcing fiber) can be produced.

### BRIEF DESCRIPTION OF THE DRAWINGS

To complete the description and with the aim of achieving a better understanding of the features of the invention, according to a practical embodiment thereof, and attached as an integral part of the description is a set of figures wherein by way of nonlimiting example, the following has been represented:
Figure 1 shows a flow diagram of a method for producing hybrid composite parts according to an embodiment of the present invention.
Figure 2 shows a block diagram of a system for producing hybrid composite parts.
Figure 3 shows a particular embodiment of a mould body for producing a particular hybrid composite part, having an omega profile made of reinforced thermoplastic matrix and inner ribs made of only thermoplastic matrix.
Figure 4A shows a top view of the hybrid composite part produced with the mould body of Figure 3. Figure 4B shows a lower view of the hybrid composite part of Figure 4A.

### DETAILED DESCRIPTION OF THE INVENTION

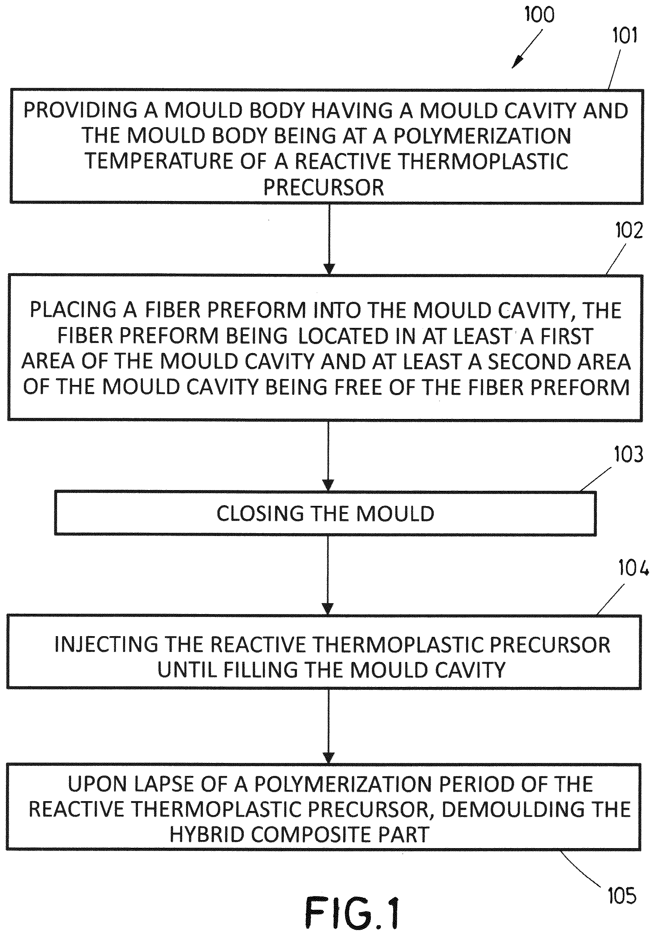

Figure 1 shows a flow diagram of a method 100 for producing hybrid composite parts according to a particular embodiment of the present invention.

At step 101 of the method 100, a mould body having an inner mould cavity is provided. The mould body is at a temperature corresponding to the polymerization temperature of the reactive thermoplastic precursor that is to be injected therein. The mould cavity inside the mould body is defined by the inner walls of the mould body. In some examples, the polymerization temperature of the reactive thermoplastic precursor may be the room temperature, while in some other examples, this polymerization temperature may be higher than the room temperature. The geometry of the mould cavity will define the shape and geometry of the resulting moulded part. For example, the mould body may comprise an upper mould and a lower mould. The mould body may incorporate heating cartridges, among other heating devices, inserted therein and distributed in the mould body.

At step 102 of the method 100, a fiber preform is placed into the mould cavity. The fiber preform will be located in at least a first area of the mould cavity while at least a second area of the mould cavity will be free of the fiber preform. In some examples, one single and continuous fiber preform portions could be placed in the mould cavity. In some other examples, several portions of fiber preform could be placed, in close proximity or separated from each other, into the mould cavity.

At step 103 of the method 100, the mould body is closed. A hydraulic or mechanical system, such a press or similar, could be used to close the mould body. Also, a manual closing could be used. For example, the upper mould of the mould body could be closed over the lower mould of the mould body.

At this point of the process, vacuum may be applied. The vacuum will be applied before the injection of the reactive thermoplastic precursor and the vacuum pressure is maintained during the polymerization process of the reactive thermoplastic precursor has finished. The vacuum applied inside the mould will facilitate the distribution of the reactive thermoplastic precursor inside the mould cavity. The vacuum level applied inside the mould cavity may be the maximum for each particular embodiment.

At step 104 of the method 100, the reactive thermoplastic precursor is injected inside the mould cavity until the space defined by the mould cavity is completely filled with the reactive thermoplastic precursor. Once the predefined vacuum level has been reached inside the mould cavity, the reactive thermoplastic precursor is injected by, for example, an injection pump into the mould. There may be pressure sensors inside the mould cavity to monitor the pressure inside the mould to control de injection pressure of the reactive thermoplastic precursor and capable to detect de pressure decrease when the reactive thermoplastic precursor solidifies. The injection of the reactive thermoplastic precursor may be carried out following a particular injection pressure profile, that ensures the complete filling of the mould cavity and the impregnation of the preform. To do that, the injection pressure profile applied to the reactive thermoplastic precursor should ensure that the thermoplastic is distributed within the mould cavity with and homogeneous flow. The low viscosity of the reactive thermoplastic precursor, e.g., ranging from 4 to 10 centipoise, will facilitate distribution of the thermoplastic fluid within the mould cavity.

At step 105 of the method 100, after a polymerization time of the reactive thermoplastic precursor, and thus, upon solidification of the reactive thermoplastic precursor, the mould body is opened and the resulting hybrid composite part is demoulded.

The moulded hybrid composite parts will comprise a reinforced thermoplastic matrix portion, corresponding to the area of the mould cavity in which the fiber preform has been located, and a thermoplastic matrix portion corresponding to the area of the mould cavity free of fiber preform. Both polymerized portions are of the same reactive thermoplastic precursor.

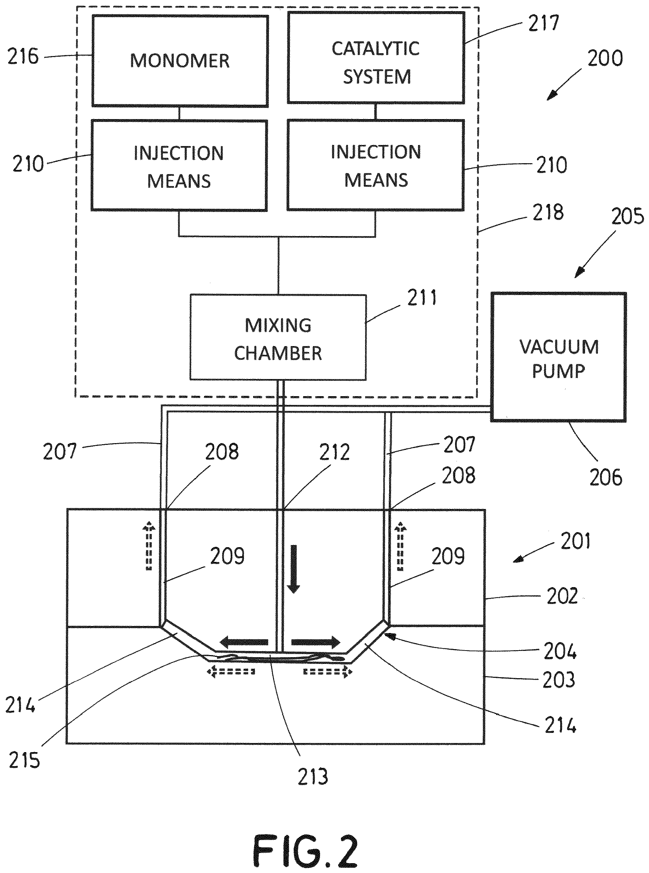

Figure 2 shows a block diagram of a system 200 for producing hybrid composite parts. It should be understood that the system 200 depicted in Figure 2 may include additional components and that some of the components described herein may be removed and/or modified.

The system 200 comprises a mould body 201 that in turn comprises one male mould (upper mould) 202 and one female mould (lower mould) 203, the male mould 202 and the female mould 203 defining a mould cavity 204. In such embodiment, the male mould 202 closes over the female mould 203. The system 200 also comprises a vacuum system 205 configured to generate vacuum inside the mould cavity 204 before the polymerization of the reactive thermoplastic precursor. The vacuum system 205 is formed by a vacuum pump 206 connected to mould 201 via two hoses 207 that suck air from the mould cavity 204 via respective outlet ports 208 in the mould body 201. The outlet ports 208 are connected to the mould cavity 204 via respective conduits 209 inside the male mould 202 of the mould body 201.

The system 200 further comprises an injection system 218, for injecting the reactive thermoplastic precursor into the mould cavity 204. The injection system 218 comprises a first container 216 for storing a monomer, such as a lactam or caprolactam, or a prepolymer, such as an acrylic, and a second container 217 for storing the catalytic system, such as a catalyst. The injection system 218 further comprises injecting means 210, for example, injection pumps, that pushes the monomer and the catalytic system coming from the first container 216 and the second container 217, respectively, towards the mixing chamber 211 and consequently to the inlet port 212 of the mould body 201. The components of the reactive thermoplastic precursor, in particular the monomer or prepolymer, and the catalytic system are mixed into the mixing chamber 211 at the moment immediately prior to being injected into the mould cavity 204. In some embodiments, the injection system 218 may comprise a first container for the monomer or prepolymer, a second container for the initiator component and a third container for the activator component such that the injecting means 210 are configured to push the three materials towards the mixing chamber 211. Alternatively, the mixing chamber 211 may receive a first premixture of a monomer or prepolymer and an initiator component and a second premixture of the same monomer or prepolymer and an activator component, said two premixtures being pushed from respective containers and towards the mixing chamber by the injecting means 210. These two premixtures may be mixed into the mixing chamber 211 at the moment immediately prior to being injected into the mould cavity 204.

The mould cavity 204 comprises a first area 213, that is configured to have the fiber preform 215, and two second areas 214, that are free of the fiber preform. The reactive thermoplastic precursor that is injected into the mould cavity 214, completely covers the fiber preform 215 and fills the mould cavity 204. Said reactive thermoplastic precursor is configured to polymerize in situ, i.e., into the mould body 201, creating a reinforced matrix portion of the hybrid composite part that corresponds to the first area 213 of the mould cavity 204, and a only matrix portion of the hybrid composite part corresponding to the two second areas 214 of the mould cavity 204.

The particular arrangement of the inlet port 212, injecting the reactive thermoplastic precursor from the centre towards the sides of the mould (solid arrows), and the outlet ports 208, sucking air from the centre towards the sides of the mould (dotted arrows), is a longitudinal line in the direction of the longitudinal axis of the mould cavity 201, that will facilitate the filing of the mould cavity 204.

While figure 2 shows a mould having one single female mould and one single male mould, the mould body may have any number of male or female moulds or mould portions defining the mould cavity. Moreover, the portions of the mould body may have any other geometry and spatial relationship depending on the shape and geometry of the parts to be manufactured.

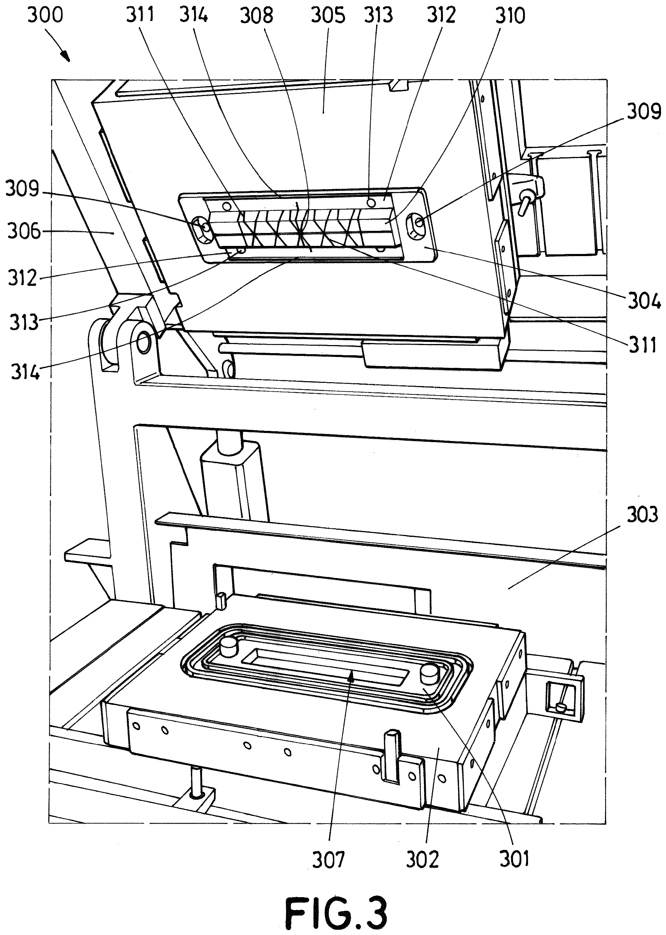

Figure 3 shows a particular embodiment of a mould body 300 for producing a particular hybrid composite part, having an omega profile and being formed by a reinforced thermoplastic matrix and inner ribs made of only thermoplastic matrix. It should be understood that the mould body 300 depicted in Figure 3 may include additional components and that some of the components described herein may be removed and/or modified.

The mould body 300 comprises a female mould 302 with a machined female cavity 301, that in turn is attached to a lower part of a pneumatique mould carrier 303. The mould body 300 also comprises a male mould 305 with a male insert 304 that is the upper part of the cavity of the mould body 300, mounted in the upper part of a pneumatic mould carrier 303. In such example, the female mould 302 is a fixed element while the male mould 305 rotates relative to the upper frame 306, such that the upper mould 305 closes over the female mould 302 creating the mould cavity 307.

The mould body 300 is made of steel and is designed to withstand a range of pressures between -1 and 100 bar. The mould body 300, and more specifically the male mould 305, has three injection and/or vacuum ports. In particular, the mould body 300 has a central inlet port 308 configured to be used for injecting the reactive thermoplastic precursor and two side outlets 309 configured to apply the vacuum to suck air from inside the mould 300. These outlet ports 309 may have geometries specifically designed to facilitate the elimination of possible volatile compounds, such as nitrogen, generated during polymerization process. The size and geometry of these outlet ports 309 are designed based on the geometry and volume of the hybrid composite part being manufactured. In such a particular embodiment, the arrangement of the inlet port 308 and the outlet ports 309 is a longitudinal line in the direction of the longitudinal axis of the mould cavity 307 for ensuring a linear flow profile for the filling, both the area with the fiber preform and the area free of fiber preform.

The male inserts 304 has been designed having a protruding body 310 comprising a set of grooves 311 and a set of circular notches 313, located on side surfaces 312 and extending from the protruding body 310. These grooves 311 are to conform a corresponding set of ribbed geometries, that will structurally reinforce the moulded hybrid composite part and the notches 313 are to conform corresponding masts. Since the fiber preform (not shown in this figure) is to be placed on the upper surface of the female cavity 301, in correspondence with the protruding body 310, and on the side surfaces 312 extending from the protruding body 310 of the male portion 304, the ribbed geometries and the masts will be made of only thermoplastic matrix.

In the area or areas where the fiber preform is placed, a set of pinch elements or clamps 314 are located such that when the mould 300 is closed, said pinch elements or clamps 314 retain the fiber preform and prevent the reactive thermoplastic precursor from passing through those areas. Therefore, the reactive thermoplastic precursor is forced to have a constant, homogeneous and controlled flow that allows the correct impregnation of the fiber preform. For example, these pinch elements 314 may be placed on different locations of the side surfaces 312, said locations corresponding with the longitudinal edges of the side surfaces 312.

Only in the case in which the technique for injecting the reactive thermoplastic precursor is the C-RTM will it be necessary to place a double joint between the female mould 302 and the male mould 305. This allows the vacuum and the resin to be injected into the lower cavity 304 of the mould body 301, before proceeding to infiltrate and fill the material through the compression process.

The mould 300 may further comprise, at least, one pressure sensor located next to one of the outlet ports, to indicate when the polymerization is complete, and the hybrid composite part can be demoulded.

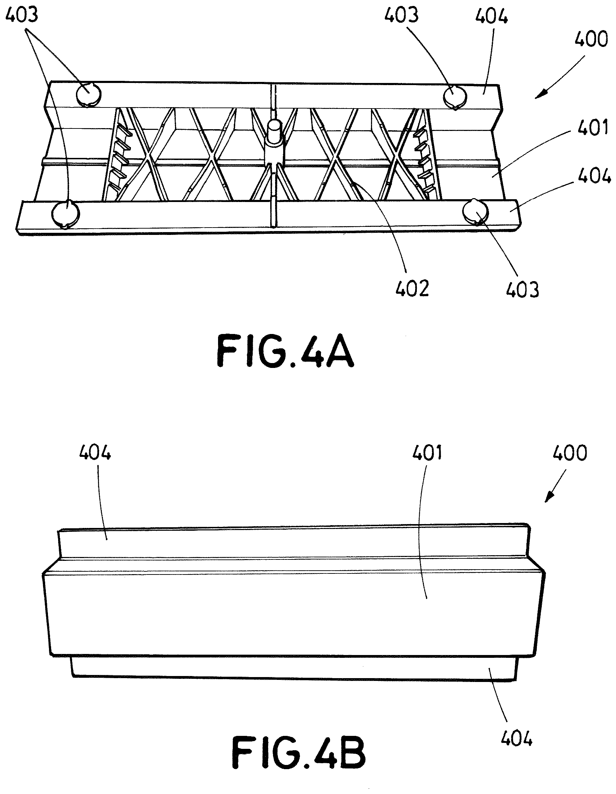

Figure 4A shows a top view of the hybrid composite part 400 produced with the mould of Figure 3. Figure 4B shows a lower view of the hybrid composite part 400 of Figure 4A. It should be understood that the hybrid composite part 400 depicted in Figure 4 may include additional components and that some of the components described herein may be removed and/or modified.

The hybrid composite part 400 is a ribbed beam having an omega-shaped external part 401, that is reinforce and that is made with a combination of fiber preform, e.g., carbon fiber fabric, and reactive thermoplastic precursor, e.g., a polyamide 6 matrix. The internal part 402 is formed by a set of crossed ribs made of only polyamide 6 matrix. The ribbed beam 400 also comprises four protrusions or masts 403 located on the upper side surfaces 404 of the omega omega-shaped external part 401 made of only polyamide 6 matrix.

For manufacturing this ribbed beam 400, a fiber preform with a 44% on volume of carbon fiber has been used. A veil incorporated into the fiber preform may be used to facilitate the preforming of the fiber preform.

The optimum polymerization temperature of the polyamide 6 matrix ranges from 165-175°C, so the mould 300 is heated to that temperature before placing the fiber preform on the upper surface of the female portion 301.

The fiber preform may be heated to a temperature of between 80-100°C to eliminate the moisture, but without affecting either the preform or the veil that is incorporated.

The monomer, e.g., ε-caprolactam, that is in solid state at room temperature, is melted into a tank at a temperature between 125-145°C.

Once the mould body 300, the preform and the monomer are in the right conditions, the fiber preform is placed in the female cavity 301 of the female mould 302. The fiber preform is placed covering the upper surface of the female cavity 301, in correspondence with the protruding body 310 of the upper mould 305 and the side surfaces 312 extending from the protruding body 310 of the male mould 305. Then the mould body 300 is closed and a vacuum is applied inside the mould cavity 307, that is completely sealed during the polymerization process.

In parallel, the mixing ratio between the ε-caprolactam and the catalytic system (initiator + activator) may be, by way of example, between a 0.1 and 0.4% molar of activator and a 0.2-1%molar of initiator, both based on ε-caprolactam.

Injection of the reactive thermoplastic precursor (lactam + initiator + activator) is carried out at a pressure between 0.5 and 2 bar and is progressively increased to 5-7 bar. This pressure is maintained during the polymerization process (between 2 and 4 minutes), during which time the hybrid composite part 400 is already polymerized.

The injection of the reactive thermoplastic precursor is carried out via the central inlet port 308. In this way, the reactive thermoplastic precursor is distributed through the mould cavity 307. Firstly, the reactive thermoplastic precursor fills the ribs near the central inlet port 308 and symmetrically moves towards both sides (as a feed channel) of the mould 300. In parallel, but at a lower speed, the impregnation of the fiber preform takes place. Once this polymerization time has elapsed, the injection is finished and an overpressure of 6-8 bars is applied to the part, through the injection port 308, in order to obtain a part with good surface finish.

The application of the vacuum inside the mould cavity 307, the injection pressure applied to the reactive thermoplastic precursor, and the subsequent overpressure applied to the part, forces the reactive thermoplastic precursor to completely fill both the area with fiber preform and the area without fiber preform, following a longitudinally oriented profile. The pinch area in the mould cavity 307 forces the reactive thermoplastic precursor to follow an oriented and homogeneous flow that guides the reactive thermoplastic precursor towards the exit zones, i.e., the outlet ports 309, where the volatile components produced can be accumulated, avoiding affections in the quality of the resulting hybrid composite part 400. After 2-3 minutes, the overpressure is removed, and the mould is opened to demould the reinforced and ribbed hybrid composite part 400.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiments described herein, but also encompasses any variations that may be considered by any person skilled in the art (for example, as regards the choice of materials, dimensions, components, configuration, etc.), within the general scope of the invention as defined in the claims.

## Claims

1. A method for producing hybrid composite parts, comprising:
providing (101) a mould body comprising at least one upper mould and at least one lower mould, the at least one upper mould and the at least one lower mould defining a mould cavity and the mould body being at a polymerization temperature of a reactive thermoplastic precursor;
placing (102) a fiber preform in the mould cavity, the fiber preform being located in at least a first area of the mould cavity, and at least a second area of the mould cavity being free of the fiber preform;
closing (103) the mould;
injecting (104) the reactive thermoplastic precursor until filling the mould cavity;
upon lapse of a polymerization period of the reactive thermoplastic precursor, demoulding (105) the hybrid composite part that comprises a reinforced thermoplasic matrix portion corresponding to the at least a first area of the mould cavity, and a thermoplastic matrix portion corresponding to the at least a second area of the mould cavity wherein structural and reinforcing elements made of only the thermoplastic matrix of the hybrid composite part are obtained into the thermoplastic matrix portion corresponding to the second area

2. The method according to claim 1, comprising mixing a monomer or prepolymer and a catalytic system in a continuous and dosed manner immediately prior to injecting the reactive thermoplastic precursor into the mould cavity, the monomer or prepolymer and the catalytic system forming the reactive thermoplastic precursor.

3. The method according to claim 1, comprising mixing a first mix of a monomer or prepolymer and an initiator component and a second mix of the monomer or prepolymer and an activator component, the first mix and the second mix forming the reactive thermoplastic precursor.

4. The method according to any one of the preceding claims, wherein prior to injecting the reactive thermoplastic precursor, the method comprises heating the mould body at the polymerization temperature of the reactive thermoplastic precursor.

5. The method according to any one of the preceding claims, wherein, prior to injecting the reactive thermoplastic precursor, the method comprises applying vacuum within the mould cavity.

6. The method according to any one of the preceding claims, comprising applying an injection pressure profile to the reactive thermoplastic precursor ranging from 0 to 100 bar, and preferably, the injection pressure profile is selected from a group comprising: a low-pressure injection profile ranging from 0 to 8 bars, a high-pressure injection profile ranging from 25 to 30 bars, a compression injection profile ranging from 50 to 100 bars and any combination thereof

7. The method according to any one of the preceding claims, wherein the fiber preform is selected from a group comprising: glass fiber preforms, aramid fiber preforms, carbon fiber preforms, natural fiber preforms and any combination thereof.

8. The method according to any one of the preceding claims, comprising providing pinch elements in the mould cavity, the pinch elements being configured to retain the fiber preform and to force the reactive thermoplastic precursor to flow homogeneously through the mould cavity.

9. The method according to any one of the preceding claims, wherein after injecting the reactive thermoplastic precursor into the mould cavity, the method comprises applying an over-pressure to the reactive thermoplastic precursor.

10. The method according to any one of the preceding claims, wherein the injection of the reactive thermoplastic precursor into the mould cavity is carried out by a resin transfer moulding technique (RTM), and more preferably a Compression RTM, High pressure RTM or High-pressure compression RTM.

## Patentansprüche

1. Verfahren zur Herstellung von hybriden Verbundstoffteilen, umfassend:
Bereitstellen (101) eines Formwerkzeugkörpers umfassend wenigstens ein oberes Formwerkzeug und wenigstens ein unteres Formwerkzeug, wobei das wenigstens eine obere Formwerkzeug und das wenigstens eine untere Formwerkzeug einen Formhohlraum definieren und der Formwerkzeugkörper bei einer Polymerisationstemperatur eines reaktionsfähigen thermoplastischen Vorläufers vorliegt;
Platzieren (102) einer Faservorform in dem Formhohlraum, wobei die Faservorform in wenigstens einem ersten Bereich des Formhohlraums angeordnet ist und wenigstens ein zweiter Bereich des Formhohlraums frei von der Faservorform ist;
Schließen (103) des Formwerkzeugs;
Einspritzen (104) des reaktionsfähigen thermoplastischen Vorläufers bis zum Füllen des Formhohlraums;
nach Ablaufen eines Polymerisationszeitraums des reaktionsfähigen thermoplastischen Vorläufers Entformen (105) des hybriden Verbundstoffteils, der einen verstärkten thermoplastischen Matrixabschnitt, der dem wenigstens einen ersten Bereich des Formhohlraums entspricht, und einen thermoplastischen Matrixabschnitt, der dem wenigstens einen zweiten Bereich des Formhohlraums entspricht, umfasst, wobei strukturelle und verstärkende Elemente, die aus nur der thermoplastischen Matrix des hybriden Verbundstoffteils gebildet sind, in dem thermoplastischen Matrixteil, der dem zweiten Teil entspricht, erhalten werden.

2. Verfahren gemäß Anspruch 1, umfassend Mischen eines Monomers oder Präpolymers und eines katalytischen Systems auf eine kontinuierliche und dosierte Weise unmittelbar vor Einspritzen des reaktionsfähigen thermoplastischen Vorläufers in den Formhohlraum, wobei das Monomer oder Präpolymer und das katalytische System den reaktionsfähigen thermoplastischen Vorläufer bilden.

3. Verfahren gemäß Anspruch 1, umfassend Mischen einer ersten Mischung eines Monomers oder Präpolymers und einer Initiatorkomponente und einer zweiten Mischung der Monomers oder Präpolymers und einer Aktivatorkomponente, wobei die erste Mischung und die zweite Mischung den reaktionsfähigen thermoplastischen Vorläufer bilden.

4. Verfahren gemäß einem der vorstehenden Ansprüche, wobei das Verfahren vor Einspritzen des reaktionsfähigen thermoplastischen Vorläufers Erhitzen des Formwerkzeugkörpers auf die Polymerisationstemperatur des reaktionsfähigen thermoplastischen Vorläufers umfasst.

5. Verfahren gemäß einem der vorstehenden Ansprüche, wobei das Verfahren vor Einspritzen des reaktionsfähigen thermoplastischen Vorläufers Anlegen von Unterdruck in dem Formhohlraum umfasst.

6. Verfahren gemäß einem der vorstehenden Ansprüche, umfassend Anlegen eines Einspritzdruckprofils an den reaktionsfähigen thermoplastischen Vorläufer in dem Bereich von 0 bis 100 bar, wobei das Einspritzdruckprofil vorzugsweise ausgewählt ist aus einer Gruppe umfassend: ein Niederdruck-Einspritzprofil in dem Bereich von 0 bis 8 bar, ein Hochdruck-Einspritzprofil in dem Bereich von 25 bis 30 bar, ein Kompressions-Einspritzprofil in dem Bereich von 50 bis 100 bar und jede Kombination davon.

7. Verfahren gemäß einem der vorstehenden Ansprüche, wobei die Faservorform ausgewählt ist aus einer Gruppe umfassend:
Glasfaser-Vorformen, Aramidfaser-Vorformen, Kohlenstofffaser-Vorformen, Naturfaser-Vorformen und jede Kombination davon.

8. Verfahren gemäß einem der vorstehenden Ansprüche, umfassend Bereitstellen von Klemmelementen in dem Formhohlraum, wobei die Klemmelemente dafür gestaltet sind, die Faservorform zu halten und den reaktionsfähigen thermoplastischen Vorläufer dazu zu zwingen, homogen durch den Formhohlraum zu fließen.

9. Verfahren gemäß einem der vorstehenden Ansprüche, wobei das Verfahren nach Einspritzen des reaktionsfähigen thermoplastischen Vorläufers in den Formhohlraum Anlegen eines Überdrucks an den reaktionsfähigen thermoplastischen Vorläufer umfasst.

10. Verfahren gemäß einem der vorstehenden Ansprüche, wobei das Einspritzen des reaktionsfähigen thermoplastischen Vorläufers in den Formhohlraum durch ein Harztransfer-Formverfahren (RTM), bevorzugter ein Kompressions-RTM, Hochdruck-RTM oder Hochdruck-Kompressions-RTM, durchgeführt wird.

## Revendications

1. Procédé de fabrication de pièces composites hybrides, comprenant :
la fourniture (101) d'un corps de moule comprenant au moins un moule supérieur et au moins un moule inférieur, ledit au moins un moule supérieur et ledit au moins un moule inférieur définissant une cavité de moule et le corps de moule étant à une température de polymérisation d'un précurseur de thermoplastique réactif ;
la mise en place (102) d'une préforme en fibres dans la cavité de moule, la préforme en fibres étant située dans au moins une première zone de la cavité de moule, et au moins une deuxième zone de la cavité de moule étant exempte de la préforme en fibres ;
la fermeture (103) du moule ;
l'injection (104) du précurseur de thermoplastique réactif jusqu'à remplir la cavité de moule ;
le démoulage (105) de la pièce composite hybride à l'issue d'une période de polymérisation du précurseur de thermoplastique réactif, laquelle pièce composite hybride comprend une partie de matrice thermoplastique renforcée correspondant à ladite au moins une première zone de la cavité de moule, et une partie de matrice thermoplastique correspondant à ladite au moins une deuxième zone de la cavité de moule, des éléments structurels et de renforcement constitués uniquement de la matrice thermoplastique de la pièce composite hybride étant obtenus dans la partie de matrice thermoplastique correspondant à la deuxième zone.

2. Procédé selon la revendication 1, comprenant le mélange d'un monomère ou d'un prépolymère et d'un système catalytique de manière continue et dosée immédiatement avant l'injection du précurseur de thermoplastique réactif dans la cavité de moule, le monomère ou le prépolymère et le système catalytique formant le précurseur de thermoplastique réactif.

3. Procédé selon la revendication 1, comprenant le mélange d'un premier mélange d'un monomère ou d'un prépolymère et d'un composant initiateur, et d'un second mélange du monomère ou du prépolymère et d'un composant activateur, le premier mélange et le second mélange formant le précurseur de thermoplastique réactif.

4. Procédé selon l'une quelconque des revendications précédentes, dans lequel avant l'injection du précurseur de thermoplastique réactif, le procédé comprend le chauffage du corps du moule à la température de polymérisation du précurseur de thermoplastique réactif.

5. Procédé selon l'une quelconque des revendications précédentes, dans lequel, avant l'injection du précurseur de thermoplastique réactif, le procédé comprend l'application d'un vide à l'intérieur de la cavité de moule.

6. Procédé selon l'une quelconque des revendications précédentes, comprenant l'application d'un profil de pression d'injection au précurseur de thermoplastique réactif allant de 0 à 100 bars, et de préférence, le profil de pression d'injection est choisi dans un groupe comprenant : un profil d'injection à basse pression allant de 0 à 8 bars, un profil d'injection à haute pression allant de 25 à 30 bars, un profil d'injection par compression allant de 50 à 100 bars et toute combinaison de ceux-ci.

7. Procédé selon l'une quelconque des revendications précédentes, dans lequel la préforme en fibres est choisie dans un groupe comprenant : les préformes en fibres de verre, les préformes en fibres d'aramide, les préformes en fibres de carbone, les préformes en fibres naturelles et toute combinaison de celles-ci.

8. Procédé selon l'une quelconque des revendications précédentes, comprenant la fourniture d'éléments de pincement dans la cavité de moule, les éléments de pincement étant configurés pour retenir la préforme en fibres et pour forcer le précurseur de thermoplastique réactif à s'écouler de façon homogène à travers la cavité de moule.

9. Procédé selon l'une quelconque des revendications précédentes, dans lequel après l'injection du précurseur de thermoplastique réactif dans la cavité de moule, le procédé comprend l'application d'une surpression au précurseur de thermoplastique réactif.

10. Procédé selon l'une quelconque des revendications précédentes, dans lequel l'injection du précurseur de thermoplastique réactif dans la cavité de moule est réalisée par une technique de moulage par transfert de résine (RTM), et plus préférentiellement une RTM par compression, une RTM par haute pression ou une RTM par compression à haute pression.
